# EUROPÄISCHE PATENTSCHRIFT

(11) **EP 3 472 373 B1**
(45) Veröffentlichungstag und Bekanntmachung des Hinweises auf die Patenterteilung: **24.11.2021**
(21) Anmeldenummer: 17732838.2
(22) Anmeldetag: 14.06.2017
(51) Int. Cl.: C25C 3/08, C25C 3/16

(54) **KATHODENBLOCK AUFWEISEND EINE NUT-GEOMETRIE**
CATHODE BLOCK HAVING A SLOT GEOMETRY
BLOC CATHODIQUE PRÉSENTANT UNE GÉOMÉTRIE À RAINURE

(30) Priorität: 15.06.2016 DE 102016210693
(43) Veröffentlichungstag der Anmeldung: 24.04.2019
(73) Patentinhaber: Tokai COBEX GmbH, 65189 Wiesbaden (DE)
(72) Erfinder: PFEFFER, Markus, 86405 Meitingen (DE); PFEFFERER, Florian, 86405 Meitingen (DE)
(74) Vertreter: WSL Patentanwälte Partnerschaft mbB
(86) Internationale Anmeldenummer: PCT/EP2017/064581
(87) Internationale Veröffentlichungsnummer: WO 2017/216243

(56) Entgegenhaltungen:
- EP-A1- 0 117 842
- DE-A1- 2 405 461
- DE-A1-102011 004 009
- DE-A1-102013 207 737
- US-A- 3 398 081
- DATABASE WPI Week 198007 Thomson Scientific, London, GB; AN 1980-12284C XP002773190, -& SU 665 023 A (IRKUT ALUMINIUM WKS) 30. Mai 1979 (1979-05-30)

## Beschreibung

Die Erfindung betrifft einen Kathodenblock auf Basis von Kohlenstoff aufweisend eine Nutgeometrie, einen Kathodenboden für eine Aluminium-Elektrolysezelle umfassend diese Kathodenblöcke sowie eine Elektrolysezelle enthaltend diese Kathodenböden.

Aluminium wird im Allgemeinen durch Schmelzflusselektrolyse in so genannten Elektrolysezellen hergestellt. Eine Elektrolysezelle umfasst generell eine Wanne aus Eisenblech oder Stahl, deren Boden mit einer Wärmeisolierung ausgekleidet ist. In dieser Wanne bilden bis zu 28 Kathodenblöcke aus Kohlenstoff oder Graphit, die mit dem negativen Pol einer Stromquelle verbunden sind, den Boden einer weiteren Wanne, deren Wand aus Seitensteinen aus Kohlenstoff, Graphit oder Siliciumcarbid besteht. Zwischen zwei Kathodenblöcken ist jeweils eine Fuge ausgebildet. Die Anordnung von Kathodenblöcken und ggf. gefüllten Fugen wird im Allgemeinen als Kathodenboden bezeichnet. Die Fugen zwischen den Kathodenblöcken werden konventionell durch Stampfmasse aus Kohlenstoff und/oder Graphit auf Steinkohlenteerbasis gefüllt. Dies dient zur Abdichtung gegen schmelzflüssige Bestandteile und Kompensation mechanischer Spannungen während der Inbetriebnahme. Als Anode dienen in der Regel Kohlenstoffblöcke, die an einem mit dem positiven Pol der Stromquelle verbundenen Traggerüst hängen.

In eine derartige Elektrolysezelle wird eine geschmolzene Mischung aus Aluminiumoxid (Al2 O3) und Kryolith (Na3AlF6), bevorzugt etwa 2 bis 5 % Aluminiumoxid, etwa 85 bis 80% Kryolith und weiteren Zusatzstoffen, einer Schmelzflusselektrolyse bei einer Temperatur von etwa 960 °C unterzogen. Dabei reagiert das gelöste Aluminiumoxid mit der festen Kohlenstoffanode und bildet flüssiges Aluminium und gasförmiges Kohlendioxid. Das Schmelzgemisch überzieht die Seiten- wände der Elektrolysezelle mit einer schützenden Kruste, während sich Aluminium aufgrund seiner größeren Dichte im Vergleich zu der Dichte der Schmelze am Boden der Elektrolysezelle unter der Schmelze ansammelt, und so vor einer Rückoxidation durch Luftsauerstoff oder Kohlendioxid geschützt ist. Das so hergestellte Aluminium wird periodisch aus der Elektrolysezelle entnommen und weiterverarbeitet.

Bei der Elektrolyse wird die Anode verbraucht, während sich der Kathodenboden während der Elektrolyse weitgehend chemisch inert verhält. Die Anode stellt daher ein Verschleißteil dar, das im Laufe der Betriebszeit häufig ausgewechselt wird, während der Kathodenboden für einen langfristigen und dauerhaften Einsatz ausgelegt ist. Dennoch unterliegen gegenwärtige Kathodenböden einem Verschleiß. Durch die sich über den Kathodenboden bewegende Aluminiumschicht erfolgt ein mechanischer Abrieb der Kathodenoberfläche. Weiterhin erfolgt durch Aluminiumcarbid-Bildung und Natriumeinlagerung eine (elektro-)chemische Korrosion des Kathodenbodens. Da im Allgemeinen 100 bis 300 Elektrolysezellen in Reihe geschaltet werden, um eine wirtschaftliche Anlage zur Herstellung von Aluminium darzustellen, und eine derartige Anlage im Allgemeinen mindestens 4 bis 10 Jahre eingesetzt werden soll, kann der Ausfall und Ersatz eines Kathodenblocks in einer Elektrolysezelle in einer derartigen Anlage teuer sein und aufwendige Reparaturen erfordern, welche die Wirtschaftlichkeit der Anlage stark herabsetzen.

Für den Betrieb der Elektrolysezelle weisen die Kathodenblöcke jeweils mindestens eine Nut zur Aufnahme von jeweils wenigstens einem Kathodenbarren, durch welchen der über die Anoden zugeführte Strom abgeführt wird, auf. Der Kathodenbarren kann hierbei aus Stahl, Kupfer, sonstigen elektrisch leitfähigen Metallen, Metalllegierungen oder Metall-Kompositen, bevorzugt aus Stahl, bestehen. Die Zwischenräume zwischen den einzelnen die Nuten begrenzenden Wänden der Kathodenblöcke und den Kathodenbarren sind normalerweise mit Gusseisen ausgegossen, wodurch eine Gusseisen- Kathodenbarren-Kombination ausgebildet wird. Durch diese Füllung der Nut wird gewährleistet, dass der Kathodenbarren im Betrieb elektrisch und mechanisch mit dem Kathodenblock verbunden ist. Dieser Eingießprozess wird auch als"Rodding" bezeichnet. Nach diesem Prozessschritt wird die Baugruppe bestehend aus Kathodenbarren, Gusseisen und Kathodenblock um 180° in die sogenannte Betriebsposition gedreht und in einer Zelle verbaut. Unter Betriebsposition wird im Rahmen dieser Erfindung verstanden, dass die Öffnung der Nut für den Kathodenbarren nach unten zeigt. Anschließend wird diese auf eine Betriebstemperatur von -960 °C gebracht und so dauerhaft für mehrere Jahre betrieben.

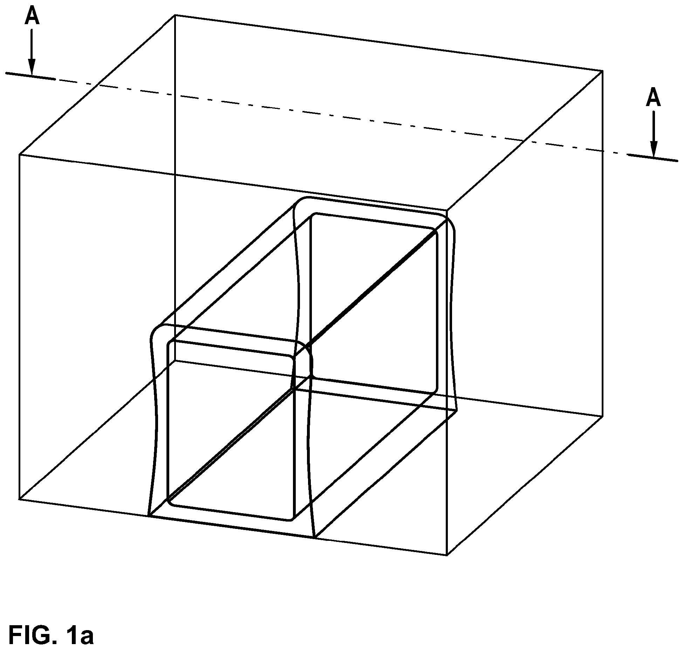

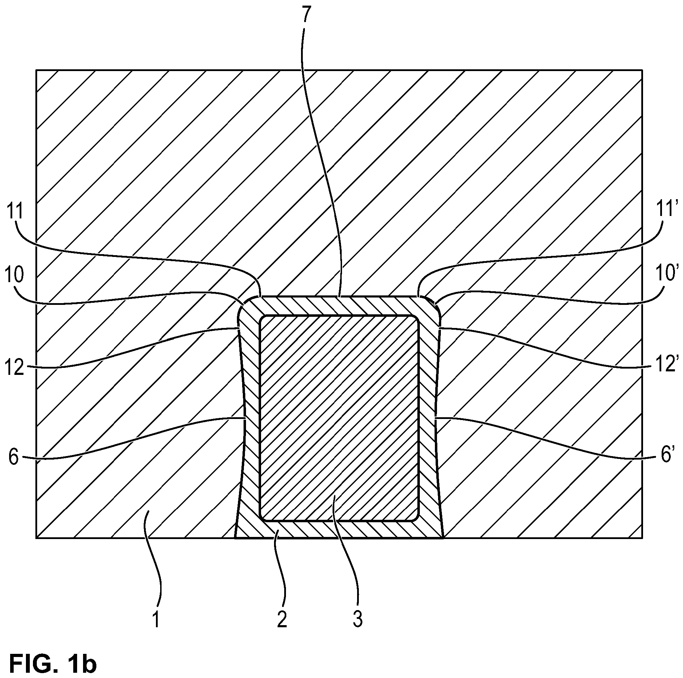

In Bezug auf ein mögliches Herausfallen der Stromschiene beim Drehen in die Betriebsposition bzw. beim Einbau ist bekannt, dass die Nutgeometrie darauf einen Ein- fluss hat. Durch eine sogenannte schwalbenschwanzförmige Nutform (siehe Figur 1 a und Figur 1 b) wird das Herausfallen des eingegossenen Kathodenbarrens verhindert, da durch die schwalbenschwanzförmige Nut die Kathodenbarren-Gusseisen-Kombination in der Nut eingeklemmt wird. In diesem Fall wird allerdings durch die unterschiedlichen thermischen Ausdehnungskoeffizienten (Coefficient of thermal expansion, CTE) der Kathodenbarren-Gusseisen-Kombination im Vergleich zum Kathodenblock mit etwa einem Faktor 3 bis 5, ein Luftspalt von 0,5 bis 10,0 mm zwischen der Kathodenbarren-Gusseisen-Kombination und dem Nutboden des Kathodenblocks nach dem Abkühlen nach dem Roddingprozess und dem Drehen der Anordnung zum Einbau ausgebildet. Der thermische Ausdehnungskoeffizient (CTE) ist ein Kennwert für die Wärmeausdehnung und beschreibt das Verhalten eines Stoffes bezüglich der Veränderungen seiner Abmessungen bei Temperaturveränderungen. Gemessen wird der CTE nach ISO 14420 vom 01.07.2005.

Beim Aufheizen auf Betriebstemperatur kommt es zu einer Ausdehnung der Kathodenbarren-Gusseisen-Kombination, wodurch ein mechanischer Druck auf den sich weniger stark ausdehnenden Kathodenblock ausgeübt wird. Dieser tritt verstärkt an den Seiten- wänden der Nut und weniger stark am Nutboden des Kathodenblocks auf. Dadurch bedingt, können Risse im Kathodenblock entstehen, die dazu führen, dass flüssiges Aluminium oder Schmelze in den Block eindringen kann, und sich somit letztendlich die Lebensdauer des Kathodenblocks vermindert.

Die Nut weist üblicherweise drei den Kathodenblock begrenzende Wände auf. Hiervon wird die bei einer rechteckigen Nut parallel zur Betriebsseite des Kathodenblocks verlaufenden Wand als Nutboden bezeichnet. Unter Betriebsseite des Kathodenblocks wird diejenige Seite des Kathodenblocks verstanden, die mit der Aluminiumschmelze in Berührung kommt. Die parallel zu den langen Seiten der Kathode verlaufenden Wände der Nut werden als Seitenwände bezeichnet. Die Bezeichnungen für die die Nut begrenzenden Wände als Seitenwände und Nutboden gelten prinzipiell für alle Nutformen, mit Ausnahme der Rundnut, bei welcher diese Unterscheidung naturgemäß nicht möglich ist.

Durch den im Betrieb geringeren Anpressdruck am Nutboden im Vergleich zu den Seitenwänden ist der Kontaktwiderstand am Nutboden immer weit größer als an den Seitenflächen des Kathodenblocks. Bei einem Luftspalt von 0,5 mm im kalten Zustand ist der Kontaktwiderstand am Nutboden mit etwa 250 Qmm2 (gemessen bei einer Betriebstemperatur von 800 bis 950 °C) etwa 25-mal so groß wie an den Seitenwänden der Nut des Kathodenblocks mit etwa 10 Qmm2 . Unter dem Kontaktwiderstand wird der elektrische Widerstand zwischen zwei aneinanderstoßenden elektrischen Leitern verstanden. Dieser kann als Differenz des Gesamtwiderstandes und der Summe der Einzelwiderstände einer derartigen Anordnung ermittelt werden, wobei die Widerstände selbst nach üblichen Verfahren, wie beispielsweise die Strom-Spannungs-Messung, bestimmt werden. Spaltmaße von 1 ,5 mm im kalten Zustand reichen aus, damit im Betrieb dauerhaft kein Kontakt zum Nutboden vorhanden ist. Der kathodische Widerstand einer Zelle ist bei fehlendem Nutbodenkontakt etwa um 10 % höher als bei einem vorhandenen Kontakt. Unter dem kathodischen Widerstand einer Zelle ist der elektrische Widerstand zu verstehen, der sich beim Stromfluss durch den Kathodenblock ausgehend von der Betriebsseite des Kathodenblocks bis zum Verlassen des Kathodenblocks über die Kathodenbarren bis an der Außenseite der Endflächen, ergibt. Durch die Erhöhung des kathodischen Widerstands wird auch der Kathoden-Spannungsabfall (Cathode Voltage Drop, CVD) entsprechend um bis zu 10 % erhöht. Der Kathoden-Spannungsabfall wird vom verwendeten Kathodenblockmatenal, der Kathodenbarren-Gusseisen-Kombination und dem Kontaktwiderstand zwischen diesen beiden Komponenten bestimmt. Aus einem erhöhten CVD resultiert eine höhere Zellenspannung und damit auch ein höherer spezifischer Energieverbrauch pro produzierte Masse Aluminium.

Ein weiterer Nachteil ist, dass durch die Natriumeinlagerung in den Kathodenboden, bedingt durch Diffusion aus der Schmelze aus Kryolith (Na3 AlF6), die Kathodenblock- geometrie geweitet wird, wodurch auch die Nutgeometrie geweitet wird. Dies hat zur Folge, dass Luftspalte erzeugt oder vergrößert werden oder sich der Anpressdruck der Kathodenbarren-Gusseisen-Kombination verringert, wodurch ein höherer Kontaktwiderstand und somit auch ein höherer CVD resultiert.

Um einen niedrigen elektrischen Widerstand und niedrigen Übergangswiderstand zwischen Stromschiene bzw. Gusseisen und Kathodenblock zu erreichen, beschreibt die DE 10 201 1 004 009 einen Kathodenblock, bei welchem zumindest eine Nut bereichsweise mit einer Graphitfolie ausgekleidet ist, bei welchem in der wenigstens einen Nut wenigstens eine Stromschiene vorgesehen ist, welche zumindest bereichsweise eine Umhüllung aus Gusseisen aufweist, und bei welchem in der die wenigstens eine Nut begrenzende Wand des Kathodenblocks wenigstens eine Vertiefung vorgesehen ist, wobei die Umhüllung aus Gusseisen wenigstens abschnittsweise in die wenigstens eine Vertiefung eingreift. Hierbei wird eine feste mechanische Verbindung zwischen der mit Gusseisen ummantelten Stromschiene und dem Kathodenblock erreicht, was einem Herausfallen der Stromschiene aus der mit Grafitfolie ausgekleideten Nut entgegenwirkt. Diese Vertiefungen können dabei einen halbkreisförmigen, dreieckigen, rechteckigen oder trapezförmigen Querschnitt aufweisen, wobei sich bei dem trapezförmigen Querschnitt die längere Grundseite des Trapezes an der Oberfläche der Wand der Nut befindet.

DE 10 2013 207737 beschreibt einen Kathodenblock aufweisend wenigstens eine sich in Längsrichtung des Kathodenblocks erstreckende Nut, wobei wenigstens eine Nut eine über die Lange des Kathodenblocks gesehen, variierende Tiefe aufweist, hierbei ist mindestens eine Vertiefung in der die Nut begrenzenden Wand vorgesehen, wobei sich die Vertiefung in Längsrichtung des Kathodenblocks horizontal erstreckt. Mit diesem Kathodenblock soll beim Betrieb der Elektrolysezelle über die Kathodenblocklänge eine im Wesentliche homogene vertikale Stromverteilung erreicht werden, zusätzlich soll ein dauerhaft niedriger spezifischer elektrischer Widerstand und niedriger Übergangswiderstand zwischen der mit Gusseisen ummantelten Stromschiene und dem Kathodenblock erreicht werden und dieser Kathodenblock soll bei großen Temperaturänderungen gegenüber mechanischen Schädigungen wie Rissbildung stabil sein. Diese Vertiefungen können dabei einen halbkreisförmigen, dreieckigen, rechteckigen oder trapezförmigen Querschnitt aufweisen, wobei sich bei dem trapezförmigen Querschnitt die längere Grundseite des Trapezes an der Oberfläche der Wand der Nut befindet.

DE 2405461 bezieht sich auf einen Kathodenblock, welcher in jeder Seitenwand der Nut mindestens eine Ausnehmung aufweist: diese Ausnehmung dient zur Verankerung mindestens einer Erhebung des den Kathodenbarren umschließenden Gusseisenmantel. Diese Ausnehmungen weisen eine rechteckige Form auf. Ziel hierbei ist, dass die Sprengung des Kathodenblocks durch Wärmedehnung des Kathodenbarrens verhindert wird.

SU 665023 beschreibt einen Kathodenblock aufweisend eine Nut, wobei in der Bodenwand der Nut sich mindestens eine Aussparung befindet. Mit diesem Kathodenblock soll der Spannungsabfall in der Elektrolysezelle verringert werden.

US 3,398,081 und EP 0117842 beziehen sich jeweils auf Kohlenstoffanoden, welche in Aluminiumelektrolysezellen eingesetzt werden. Diese Kohlenstoffanoden weisen Aussparungen auf, in welche Gusseisen gegossen werden kann. Das erstarrte Gusseisen führt zu einem guten elektrischen und mechanischen Kontakt mit den Anodenstanqen.

Die CH 663624 beschreibt einen Kathodenblock, bei welchem die Stromschiene mit Pass-Sitz eingefügt wird, wobei der Kathodenblock über die ganze Oberfläche der Nut Erhebungen aufweist. Diese Erhebungen können im Querschnitt dreieckig, rechteckig, quadratisch, trapezförmig oder sinusförmig sein, wobei sich ebenfalls bei dem trapezförmigen Querschnitt die längere Grundseite des Trapezes an der Oberfläche der Wand der Nut befindet. Mit diesem Kathodenblock soll der elektrische Übergangswiderstand zwischen Stromschiene und Kathodenblock verringert werden; nachdem die Stromschiene mit Pass-Sitz angeordnet ist, wird kein Gusseisen verwendet.

Die Aufgabe der vorliegenden Erfindung ist es daher, einen alternativen Kathodenblock für eine Aluminium-Elektrolysezelle bereitzustellen, welcher beim Betrieb der Elektrolysezelle einen niedrigen und insbesondere auch über einen ausgedehnten Elektrolysezeitraum dauerhaft niedrigen elektrischen Widerstand und insbesondere auch niedrigen Kontaktwiderstand zwischen Kathodenbarren bzw. Gusseisen und Kathodenblock aufweist. Zudem weist der Kathodenblock durch den niedrigeren Kontaktwiderstand auch einen niedrigeren Kathoden-Spannungsabfall auf, wodurch der Energieverlust in der Zelle und der spezifische Energieverbrauch pro produzierte Masse Aluminium geringer ist.

Die Aufgabe wird durch einen Kathodenblock auf Basis von Kohlenstoff für eine Elektrolysezelle zur Herstellung von Aluminium mit mindestens einer Nut zur Aufnahme von wenigstens einem Kathodenbarren, wobei die mindestens eine Nut, mindestens eine, zumindest abschnittsweise in deren Längsrichtung verlaufende Aussparung, mit mindestens einer Hinterschneidung, aufweist, wobei Aussparung mit Hinterschneidung als eine Form definiert ist, die dazu führt, dass nach Füllung der Aussparung mit beispielsweise flüssigem Gusseisen das erstarrte Gusseisen nicht aus der Aussparung ohne Zerstörung der Form entfernt werden kann und wobei sich die mindestens eine Aussparung im Nutboden und/oder im Nutradius der Nut befindet, gelöst.

Unter einer in Längsrichtung verlaufenden Aussparung wird verstanden, dass diese von der einen schmalen Seite des Kathodenblocks zur anderen schmalen Seite des Kathodenblocks verläuft, d. h. zwischen deren sogenannten Endflächen (siehe Figur 1 a). Zumindest abschnittsweise in Längsrichtung verlaufende Aussparung bedeutet, dass die Aussparung nicht zwangsläufig über die gesamte Länge des Kathodenblocks verlaufen muss, sondern auch nur abschnittsweise vorhanden sein kann. Vorteilhafterweise weist der Kathodenblock entweder mindestens eine über die Kathodenlänge durchgehende Aussparung und/oder zwei bis acht Aussparungsabschnitte auf, wobei bevorzugt zwei bis drei Aussparungsabschnitte vorhanden sind. Die abschnittsweisen Aussparungen haben den Vorteil, dass gezielt lokal der Stromfluss durch den Kathodenblock beeinflusst werden kann. Die maximale Länge der Aussparungsabschnitte beträgt vorteilhafterweise 1/3 der Kathodenlänge bei zwei Aussparungsabschnitten und minimal 1/20 der Kathodenlänge bei acht Aussparungsabschnitten. Bei mehr als acht Aussparungsabschnitten liegt kein Unterschied mehr zwischen einer über die gesamte Länge durchgehenden Aussparung vor und bei mehr als acht Aussparungsabschnitten ist es technisch leichter eine durchgehende Aussparung zu verwenden.

Im Querschnitt betrachtet, das heißt bei Betrachtung der Endflächen des Kathodenblocks, weist der Kathodenblock mindestens eine Aussparung auf, wobei die Anzahl der Aussparungen abhängig von der Größe der Aussparungen ist und der Abstand zwischen zwei Aussparungen ist vorteilhafterweise mindestens 10 mm größer sein als die Summe der Radien der Kreise der benachbarten Aussparungen.

Im Rahmen dieser Erfindung wird als eine Aussparung mit Hinterschneidung eine Form angesehen, die dazu führt, dass nach der Füllung der Aussparung mit beispielsweise flüssigem Gusseisen, das erstarrte Gusseisen nicht aus der Aussparung ohne Zerstörung der Form entfernt werden kann. Dabei wird ein Entfernen durch Verschieben in Längsrichtung des Kathodenblocks nicht betrachtet.

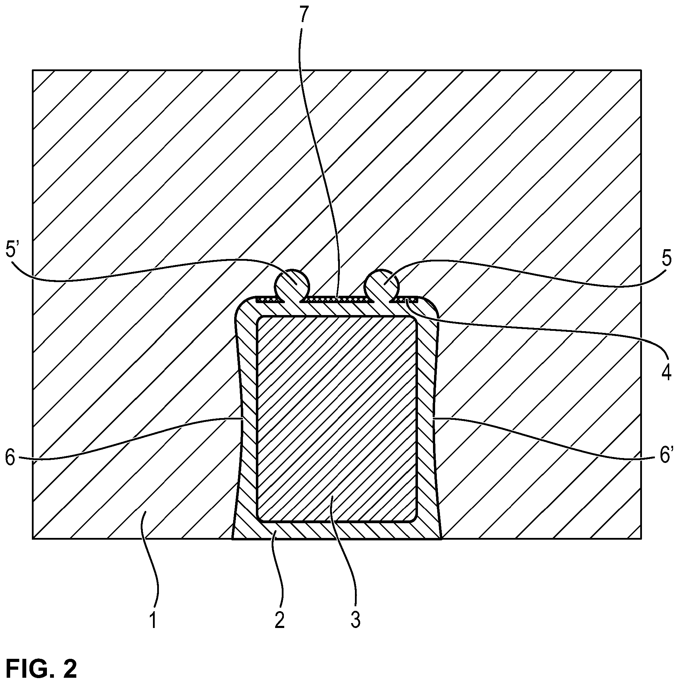

Dies soll am Folgenden, nicht die Erfindung beschränkenden, Beispiel einer Aussparung mit Hinterschneidung (siehe Figur 2) erläutert werden. Gemäß der Ausführungsform in Figur 2 eines Kathodenblocks im Querschnitt weist die Aussparung (5, 5') beispielsweise einen geöffneten Kreis mit einem Durchmesser von 50 mm und eine Öffnungsbreite des Kreises von 10 mm zur Nut hin auf. Somit ist der Durchmesser des geöffneten Kreises größer als die Öffnungsbreite des geöffneten Kreises. Nach dem Aushärten des eingefüllten Gusseisens kann durch diese Form der Aussparung das Gusseisen nicht aus der Aussparung herausfallen oder ohne Zerstörung aus der Aussparung entfernt werden. Das erstarrte Gusseisen wird also bedingt durch die Form der Aussparung, das heißt aufgrund der vorhandenen Hinterschneidung, in der Form fixiert.

Durch die Aussparung mit Hinterschneidung wird eine verbesserte Verankerung und Positionierung des Kathodenbarrens in der Nut erreicht, so dass der Luftspalt, der nach dem Abkühlen des Roddingprozesses und Drehen des Kathodenblocks in Betriebsposition zwischen der Kathodenbarren-Gusseisen-Kombination und des Kathodenblocks entsteht, auf kleiner als 0,5 mm reduziert wird. Diese Reduktion führt beim Aufheizen des Kathodenblocks auf Betriebstemperatur der Elektrolysezelle zu einer Verringerung des Kontaktwiderstandes auf 1 bis 3 Ωmm2 am Nutboden, was einer Verbesserung um das 8- bis 25-fache entspricht. Dies bedingt wiederum einen geringeren Kathoden- Spannungsabfall (CVD) von 20 - 50 mV. Aus dem verringerten Kathoden-Spannungsabfall resultiert ein um 1 bis 2 % geringerer Energieverlust in der Zelle und damit auch ein um 1 bis 2 % geringerer spezifischer Energieverbrauch pro produzierte Masse Aluminium.

Im Rahmen dieser Erfindung wird unter Nutradius der Übergangsbereich zwischen Seitenwand der Nut und Nutboden bezeichnet. In Figur 1 b ist eine Nut im Querschnitt dargestellt, wobei der Übergangsbereich (11, 11 ') den Anfang dieses Bereichs und (12,12') das Ende des Übergangsbereichs kennzeichnet. Durch den Übergangsbereich werden Spannungen und daraus resultierende Risse minimiert. Durch die gewählte Anordnung der Aussparungen wird eine optimale Verankerung der Kathodenbarren-Gusseisen-Kombination am Nutboden ermöglicht, wodurch ein verbesserter Kontakt zwischen der Kathodenbarren-Gusseisen-Kombination und dem Kathodenblock erreicht wird.

Vorteilhafterweise weist die in Längsrichtung verlaufende mindestens eine Aussparung im Querschnitt die Form eines zur Nut hin geöffneten Kreises oder eines zur Nut hin geöffneten Kreises mit Schaft, wobei die Öffnung kleiner als der Durchmesser des Kreises ausgebildet ist, auf. Unter dem Querschnitt wird eine Darstellung der Schnittfläche eines senkrecht zur Längsachse durchgeschnittenen Körpers verstanden. Der kreisförmige Teil der Aussparung reduziert die mechanischen Spannungen, da die wirkenden Kräfte gleichmäßig über die Kreisform verteilt werden und es wird ein vollflächiger Anpressdruck ermöglicht. Nach einer weiteren bevorzugten Ausführungsform der vorliegenden Erfindung weist der geöffnete Kreis der mindestens einen Aussparung oder der geöffnete Kreis der mindestens einen Aussparung mit einem Schaft einer Breite von 5 bis 60 mm, bevorzugt von 10 bis 45 mm, besonders bevorzugt von 15 bis 30 mm auf. Bei einer Breite des Schafts von größer als 5 mm fließt das Gusseisen leichter in die Aussparung, damit diese komplett gefüllt werden kann. Bei einer Breite des Schaftes von größer als 60 mm liegt keine Aussparung mit Hinterschneidung mehr vor.

Vorteilhafterweise weist der Schaft der mindestens einen Aussparung eine Tiefe von 3 bis 30 mm, bevorzugt von 5 bis 20 mm, besonders bevorzugt von 10 bis 15 mm auf. Im Rahmen dieser Erfindung wird als Tiefe die Länge des Schafts der Aussparung von der Nut in Richtung der Außenseiten des Kathodenblocks angesehen. Bei einer Tiefe des Schafts von größer als 30 mm treten zu große Zugspannungen auf, die ein Einreißen des Kathodenblocks bewirken. Bei einer Tiefe des Schafts von kleiner als 3 mm treten an der Kreisöffnung zu große Zugspannungen auf, die ein Einreißen des Kathodenblocks verursachen. Risse im Kathodenblock führen zu einer verkürzten Lebensdauer des Kathodenblocks oder sogar zu einem Komplettausfall der Elektrolysezelle.

Vorteilhafterweise verlaufen bei dem Schaft der mindestens einen Aussparung, die Wände im Querschnitt parallel oder nicht parallel zueinander, besonders bevorzugt parallel.

Nach einer weiteren bevorzugten Ausführungsform der vorliegenden Erfindung verläuft der Schaft der mindestens einen Aussparung ausgehend von der Kreisöffnung zur Nut hin senkrecht, sich verjüngend oder sich verbreitend. Unter sich verjüngend wird verstanden, dass die Breite des Schafts von der Öffnung des Kreises zur Nut hin kleiner wird und unter verbreiternd wird verstanden, dass die Breite größer wird.

Gemäß einer noch weiteren bevorzugten Ausführungsform der vorliegenden Erfindung weist die mindestens eine in Längsrichtung verlaufende Aussparung über die Länge des Kathodenblocks gesehen eine variierende Gesamttiefe in Bezug auf den Nutboden auf und die mindestens eine Aussparung an den längsseitigen Enden des Kathodenblocks eine geringere Gesamttiefe als in der Kathodenblockmitte auf. Diese variierende Gesamttiefe hat den Vorteil, dass das Gesamtvolumen der Nut verkleinert wird und somit der Gusseisenbedarf reduziert wird. Zudem treten auch weniger thermische Spannungen auf, was wiederum das Risiko von Rissen aufgrund des geringeren Anpressdruckes des Gusseisens an den Kathodenblock vermindert.

Nach einer noch weiteren bevorzugten Ausführungsform der vorliegenden Erfindung weist die in Längsrichtung verlaufende mindestens eine Aussparung eine Gesamttiefe von 5 mm bis 80 mm, bevorzugt von 10 bis 50 mm, besonders bevorzugt von 15 bis 35 mm auf. Die Gesamttiefe der Aussparung von 5 mm bis 80 mm erlaubt eine problemfreie und vollständige Befüllung der Aussparung mit Gusseisen, was die mechanische Stabilität der gefüllten Aussparung erhöht. Bei einer größeren Gesamttiefe als 80 mm treten vermehrt Zugspannungen auf, welche die Stabilität verringern. Bei einer kleineren Gesamttiefe als 5 mm treten die vorteilhaften Effekte auf Grund von zu kleinen Flächen und Geometrien nicht mehr auf.

Vorteilhafterweise ist der minimale Abstand zwischen den Mittelpunkten der geöffneten Kreise mindestens 10 mm größer als die Summe der Radien der Kreise der benachbarten Aussparungen. Ist der Abstand zwischen den Mittelpunkten der geöffneten Kreise kleiner, kommt es zu einer Verschlechterung der mechanischen Stabilität bedingt durch Rissbildung.

Gemäß einer weiteren bevorzugten Ausführungsform der vorliegenden Erfindung ist die mindestens eine Aussparung mit Gusseisen oder einer Kombination aus Kupfer oder Stahl als leitfähigem Metall und Gusseisen gefüllt. Das leitfähige Metall erzeugt eine Vergleichmäßigung der Stromverteilung längs der Kathode. Zudem wird der Anpressdruck des Kathodenbarrens an den Nutboden im Betrieb durch die größere Ausdehnung des leitfähigen Metalls relativ zum Kohlenstoffmaterial der Kathode erhöht.

Nach einer noch weiteren bevorzugten Ausführungsform der vorliegenden Erfindung weist das Gusseisen einen Kohlenstoffgehalt von größer als 2,0 Gew.-%, bevorzugt von größer als 2,5 Gew.-%, besonders bevorzugt von größer als 3,0 Gew.-%, einen Siliziumgehalt von größer als 1 ,8 Gew.-%, bevorzugt von größer als 2,0 Gew.-%, besonders bevorzugt von größer als 2,5 Gew.-% und einen Phosphorgehalt von größer als 0,5 Gew.-%, bevorzugt von größer als 0,8 Gew.-% und besonders bevorzugt von größer als 1 ,0 Gew.-% auf. Gemäß Wilkening und Cote in"Problems of the Stub-Anode Connection" (Light Metals 2007, S. 865 - 873) ergibt sich der Kohlenstoffsättigungsgrad Sc bei Gusseisen zu Sc = %C / (4,23 - 0,312 Si - 0,33 P + 0,066 Mn)%, wobei % C den Kohlenstoffgehalt und Si, P, Mn den Gehalt der entsprechenden Elemente darstellen. Unter Umständen sind hypereutektische Kohlenstoffkonzentrationen (Übersättigung) möglich, wobei Sc über 1 liegen kann. Im Rahmen der Erfindung ist es vorteilhaft, wenn die mindestens eine Aussparung wenigstens zu 50 Vol-%, bevorzugt wenigstens zu 80 Vol-%, besonders bevorzugt wenigstens zu 90 Vol-%, und äußerst bevorzugt zu 100 Vol-% mit Gusseisen gefüllt ist. Bei einer Füllung von weniger als 50 % kann es zu Bildung von Luftspalten und dem Verlust des Anpressdruckes kommen, was zu einer Verschlechterung des Kontaktes zwischen der Kathodenbarren-Gusseisen-Kombination und dem Kathodenblock führt.

Nach einer noch weiteren bevorzugten Ausführungsform der vorliegenden Erfindung ist die mindestens eine Aussparung mit bis zu 10 Vol-%, bevorzugt bis zu 25 Vol-%, besonders bevorzugt bis zu 50 Vol-%, mit Kupfer oder Stahl alsleitfähigem Metall, welches eine höhere elektrische Leitfähigkeit als Gusseisen aufweist, gefüllt. Der noch ungefüllte Teil der Aussparung wird mit Gusseisen bis zu einem Füllgrad von 100 Vol-% aufgefüllt. Durch die Füllung mit dem leitfähigen Metall wird eine Vergleichmäßigung der Stromverteilung längs der Kathode erreicht. Bei mehr als 50 Vol-% ist eine Füllung des Restvolumens mit Gusseisen stark erschwert. Bei einer Füllung von weniger als 10 Vol-% der Aussparung mit einem leitfähigen Metall tritt der Effekt der Vergleichmäßigung der Stromverteilung nicht auf.

Bevorzugt weist das leitfähige Metall in Form von Kupfer oder Stahl der Füllung die Form einer Folie oder eines Stabes auf. Die Verwendung eines Stabes oder Folie ermöglicht ein kostengünstiges Verfahren und eine Vereinfachung der Herstellung im Vergleich zum Eingießen eines leitfähigen Metalls, wie beispielsweise Kupfer.

Vorteilhafterweise weist die leitfähige Metallfolie eine Dicke von 0,2 bis 3,0 mm, bevorzugt von 0,5 bis 2,0 mm, besonders bevorzugt von 0,8 bis 1 ,5 mm auf.

Nach einer weiteren bevorzugten Ausführungsform der vorliegenden Erfindung weist der leitfähige Metallstab im Querschnitt die Form eines Rechtecks oder eines Dreiecks oder eines Kreises oder eines Kreisabschnittes auf. Im Rahmen dieser Erfindung wird unter einem Kreisabschnitt die Teilfläche eines Kreises, der von einem Kreisbogen und einer Kreissehne begrenzt wird, verstanden. Hierrunter fällt beispielsweise eine im Querschnitt halbkreisförmige Form.

Nach einer noch weiteren bevorzugten Ausführungsform der vorliegenden Erfindung weist der leitfähige kreisförmige Metallstab einen Durchmesser von 10 bis 40 mm, bevorzugt von 15 bis 30 mm, besonders bevorzugt von 20 bis 25 mm auf.

Bevorzugt ist die mindestens eine Nut zur Aufnahme des Kathodenbarrens im Querschnitt rechteckig oder schwalbenschwanzförmig, bevorzugt schwalbenschwanzförmig.

Vorteilhafterweise weist die mindestens eine Nut des Kathodenblocks eine variierende Tiefe und die Nut an den längsseitigen Enden des Kathodenblocks eine geringere Tiefe als in der Kathodenblockmitte auf. Dadurch wird bei dem Betrieb der Elektrolysezelle über die Kathodenblocklänge eine homogenere vertikale Stromverteilung erreicht, wodurch der erhöhte Verschleiß an den Kathodenblockenden verringert und so die Lebensdauer der Kathode erhöht wird.

Nach einer weiteren bevorzugten Ausführungsform der vorliegenden Erfindung ist die mindestens eine Nut zumindest teilweise von den längsseitigen Enden des Kathodenblocks jeweils zu 1/3 der Kathodenlänge, bevorzugt über die gesamte Länge, mit einer Graphitfolie ausgekleidet. Die Graphitfolie kann mit Graphitkleber, wie beispielsweise einem graphitgefüllten Kleber auf Kunstharzbasis, eingeklebt werden, festgeklammert werden oder auch einfach nur eingelegt werden.

Die Graphitfolie kann einen Graphit ausgewählt aus der Gruppe bestehend aus Naturgraphit, synthetischem Graphit oder expandiertem Graphit enthalten. Expandierter Graphit kann beispielsweise wie in DE1003927A1 erhalten werden.

Nach einer weiteren bevorzugten Ausführungsform der vorliegenden Erfindung besteht die Graphitfolie bevorzugt aus expandiertem Graphit oder enthält zumindest teilweise expandierten Graphit. Die Verwendung einer derartigen Graphitfolie führt zu einer einheitlicheren Stromverteilung längs des Kathodenblocks und verringert die mechanische Beanspruchung der Nut, da die Graphitfolie durch die Eigenschaft der Kompressibilität einen dauerhaften Kontakt zwischen der Kathodenbarren-Gusseisen-Kombination und dem Kathodenblock ermöglicht. Zudem wird bei Verwendung einer Graphitfolie der Kontaktwiderstand verringert, da die effektive Kontaktfläche durch die Anpassung der Graphitfolie an die Oberflächenstruktur des Kathodenblocks und der Gusseisenschicht größer ist.

Vorteilhafterweise weist die Graphitfolie eine Dicke zwischen 0,2 bis 3,0 mm, bevorzugt zwischen 1 ,0 bis 3,0 mm und besonders bevorzugt zwischen 1 ,5 bis 2,0 mm auf. Erst ab einer Dicke von 0,2 mm und größer wird der Kontaktwiderstand verringert, da durch die Graphitfolie die Kontaktfläche vergrößert wird. Bei einer Dicke von größer als 3,0 mm wird die Handhabung der Graphitfolie aufgrund von deren eingeschränkter Formbarkeit erschwert.

Es ist weiterhin vorteilhaft, dass die Graphitfolie eine Dichte von 0,04 bis 1 ,3 g/cm3 , bevorzugt 0,2 bis 0,5 g/cm3 und besonders bevorzugt 0,3 g/cm3 aufweist.

Nach einer noch weiteren bevorzugten Ausführungsform der vorliegenden Erfindung ist der Kathodenblock aus einem Material zusammengesetzt, welches mindestens 50 Gew.-% Kohlenstoff, bevorzugt mindestens 70 Gew.-%, besonders bevorzugt mindestens 90 Gew.-% und ganz besonders bevorzugt mindestens 99 Gew.-% enthält.

Hierbei kann der Kohlenstoff aus der Gruppe bestehend aus amorphen Kohlenstoffen, graphitischen Kohlenstoffen, graphitierten Kohlenstoffen und beliebigen Mischungen aus zwei oder mehr der vorangegangenen Kohlenstoffe ausgewählt werden. Ein weiterer Gegenstand der vorliegenden Erfindung ist ein Kathodenboden, welcher wenigstens einen zuvor beschriebenen Kathodenblock enthält. Vorzugsweise enthält ein Kathodenboden 8 bis 36 der zuvor beschriebenen Kathodenblöcke.

Ferner betrifft die vorliegende Erfindung eine Elektrolysezelle zur Herstellung von Aluminium, die zumindest einen zuvor beschriebenen Kathodenboden enthält.

Nachfolgend wird die vorliegende Erfindung rein beispielhaft anhand vorteilhafter Ausführungsformen und unter Bezugnahme auf die beigefügten Zeichnungen beschrieben.
Figur 1 a zeigt eine perspektivische Ansicht eines in Betriebsposition gebrachten Kathodenblocks mit einem mit Gusseisen eingegossenen Kathodenbarren.
Figur 1 b zeigt einen im Querschnitt (Schnittansicht von Figur 1 a durch Linie A) eines in Betriebsposition gebrachten Kathodenblocks mit einem mit Gusseisen eingegossenen Kathodenbarren.
Figur 2 zeigt einen Querschnitt eines in Betriebsposition gebrachten erfindungsgemäßen Kathodenblocks mit einem mit Gusseisen eingegossenem Kathodenbarren.
Figur 3 zeigt einen Querschnitt einer weiteren Ausführungsform eines in Betriebsposition gebrachten erfindungsgemäßen Kathodenblocks mit einem mit Gusseisen eingegossenem Kathodenbarren.
Figur 4 zeigt einen Querschnitt einer weiteren Ausführungsform eines in Betriebsposition gebrachten erfindungsgemäßen Kathodenblocks mit einem mit Gusseisen eingegossenem Kathodenbarren.
Figur 5 zeigt einen Querschnitt einer weiteren Ausführungsform eines in Betriebsposition gebrachten erfindungsgemäßen Kathodenblocks mit einem mit Gusseisen eingegossenem Kathodenbarren.
Figur 6 zeigt einen Querschnitt einer weiteren Ausführungsform eines in Betriebsposition gebrachten erfindungsgemäßen Kathodenblocks mit einem mit Gusseisen eingegossenem Kathodenbarren.
Figur 7 zeigt eine perspektivische Ansicht einer in Betriebsposition gebrachten Hälfte eines Kathodenblocks, wobei die Nut eine variierende Tiefe aufweist und die Nut an dem längsseitigen Ende des Kathodenblocks eine geringere Tiefe als in der Mitte des Kathodenblocks aufweist.

Figur 1 a zeigt eine perspektivische Ansicht eines in Betriebsposition gebrachten Kathodenblocks mit einem mit Gusseisen eingegossenen Kathodenbarren.

Figur 1 b zeigt den Querschnitt (Schnittansicht von Figur 1 a durch Linie A) eines in Betriebsposition gebrachten Kathodenblocks (1) mit einem mit Gusseisen eingegossenen Kathodenbarren (3). Der Kathodenbarren (3) befindet sich in der Nut (2), die durch die Seitenwände der Nut (6, 6') und den Nutboden (7) gebildet wird, und ist von Gusseisen umgeben. Die dargestellte Form der Nut ist eine Schwalbenschwanzform. Der Übergangsbereich des Nutradius (10, 10') wird durch den Übergangsbereich zwischen dem Anfang (1 1 , 1 1 ') und dem Ende (12, 12') begrenzt.

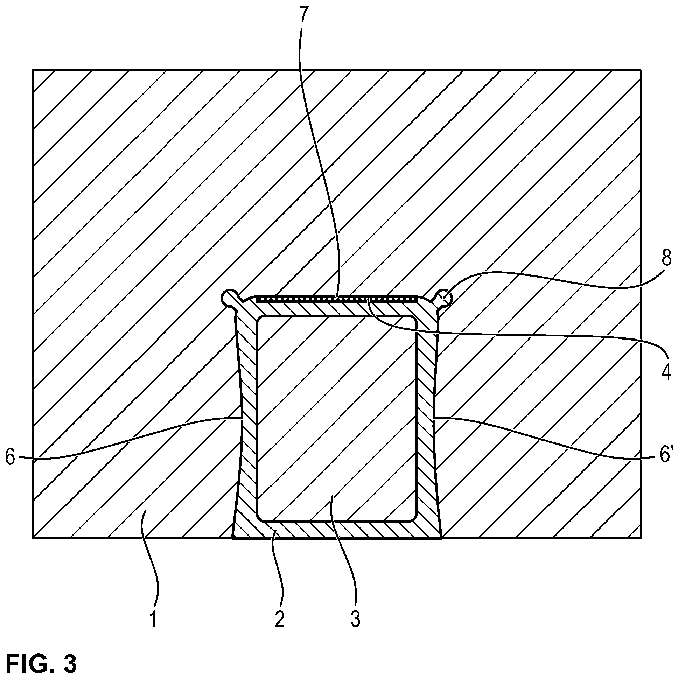

Figur 2 zeigt den Querschnitt eines in Betriebsposition gebrachten Kathodenblocks (1) mit einem mit Gusseisen eingegossenen Kathodenbarren (3). Der Kathodenbarren (3) befindet sich in der Nut (2), die durch die Seitenwände der Nut (6,6') und den Nutboden (7) gebildet wird, und ist von Gusseisen umgeben. Am Nutboden (7) befindet sich eine Graphitfolie (4) und zwei Aussparungen mit Hinterschneidungen (5, 5'). Figur 3 zeigt den Querschnitt eines in Betriebsposition gebrachten Kathodenblocks (1) mit einem mit Gusseisen eingegossenen Kathodenbarren (3). Der Kathodenbarren (3) befindet sich in der Nut (2), die durch die Seitenwände der Nut (6,6') und den Nutboden (7) gebildet wird, und ist von Gusseisen umgeben. Am Nutboden (7) befindet sich eine Graphitfolie (4). Die zwei Aussparungen mit Hinterschneidungen und Schaft (8) befinden sich in den Nutradien am Nutboden (7).

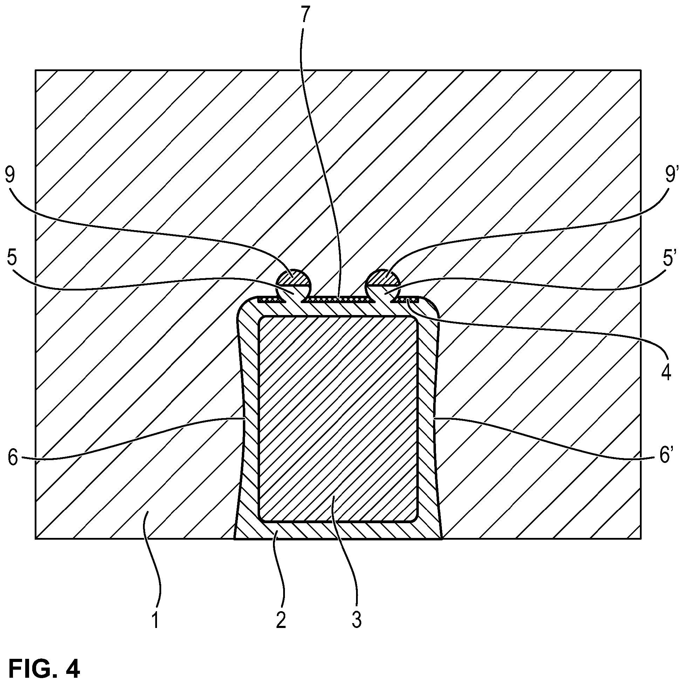

Figur 4 zeigt den Querschnitt eines in Betriebsposition gebrachten Kathodenblocks (1) mit einem mit Gusseisen eingegossenen Kathodenbarren (3). Der Kathodenbarren (3) befindet sich in der Nut (2), die durch die Seitenwände der Nut (6,6') und den Nutboden (7) gebildet wird, und ist von Gusseisen umgeben. Am Nutboden (7) befinden sich eine Graphitfolie (4) und zwei Aussparungen mit Hinterschneidungen (5, 5'), welche eine Kupferfüllung (9,9') aufweisen. Die Kupferfüllung wurde flüssig eingegossen.

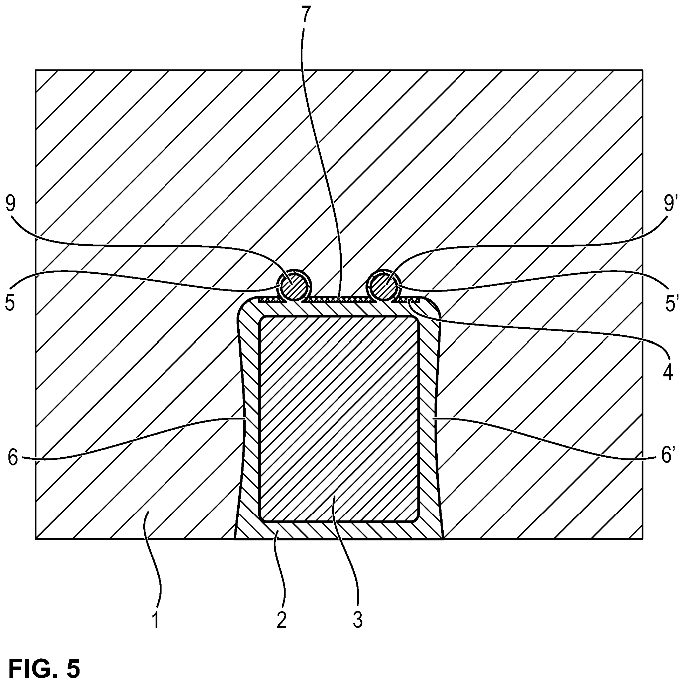

Figur 5 zeigt den Querschnitt eines in Betriebsposition gebrachten Kathodenblocks (1) mit einem mit Gusseisen eingegossenen Kathodenbarren (3). Der Kathodenbarren (3) befindet sich in der Nut (2), die durch die Seitenwände der Nut (6,6') und den Nutboden (7) gebildet wird, und ist von Gusseisen umgeben. Am Nutboden (7) befinden sich eine Graphitfolie (4) und zwei Aussparungen mit Hinterschneidungen (5, 5'), welche einen im Querschnitt kreisförmigen Kupferstab (9, 9') als Füllung aufweisen.

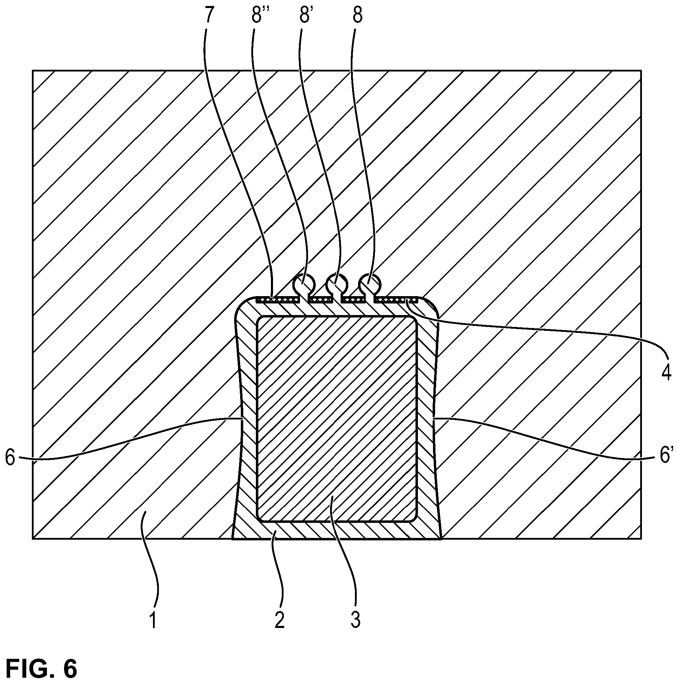

Figur 6 zeigt den Querschnitt eines in Betriebsposition gebrachten Kathodenblocks (1) mit einem mit Gusseisen eingegossenen Kathodenbarren (3). Der Kathodenbarren (3) befindet sich in der Nut (2), die durch die Seitenwände der Nut (6,6') und den Nutboden (7) gebildet wird, und ist von Gusseisen umgeben. Am Nutboden (7) befinden sich eine Graphitfolie (4) und drei Aussparungen mit Hinterschneidungen und Schaft (8).

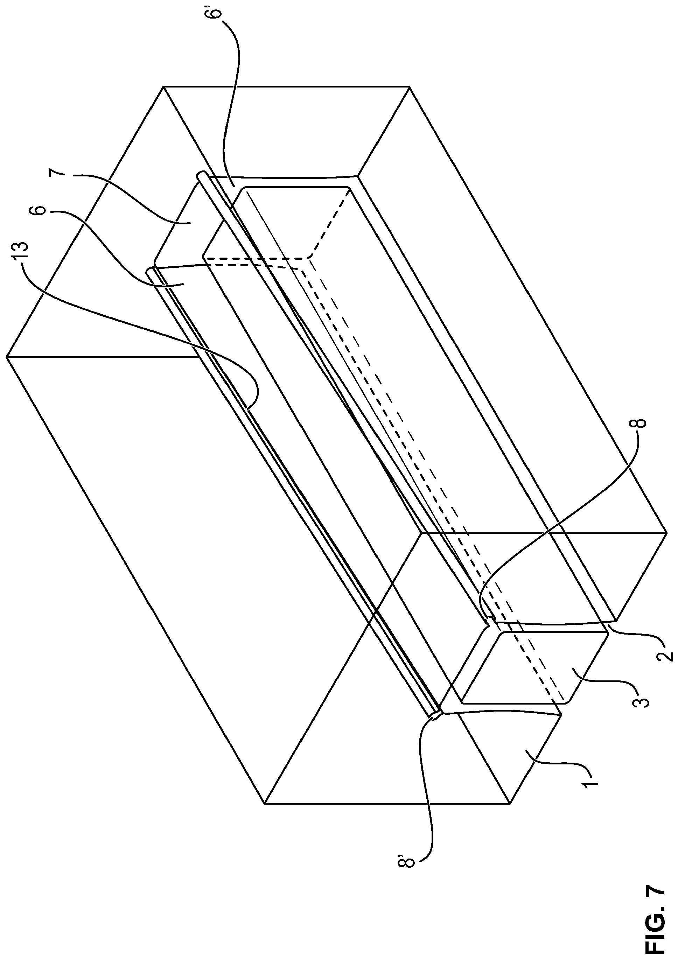

Figur 7 zeigt eine perspektivische Ansicht einer sich in Betriebsposition gebrachten Hälfte eines Kathodenblocks, wobei die Nut eine variierende Tiefe aufweist und die Nut an dem längsseitigen Ende des Kathodenblocks eine geringere Tiefe als in der Mitte des Kathodenblocks aufweist. Der Kathodenbarren (3) befindet sich in der Nut (2), die durch die Seitenwände der Nut (6, 6') und den Nutboden (7) gebildet wird, und ist von Gusseisen umhüllt. Die zwei Aussparungen mit Hinterschneidungen und Schaft (8) befinden sich in den Nutradien am Nutboden, d.h. im Übergang zwischen Seitenwänden (6,6') und Nutboden (7). Die Nut (2) weist an den längsseitigen Enden des Kathodenblocks eine geringere Tiefe als in der Mitte des Kathodenblocks auf, d.h. sie stellt eine Nut mit variierender Tiefe (13) dar.

Nachfolgend wird die vorliegende Erfindung anhand von Ausführungsbeispielen erläutert, wobei die Ausführungsbeispiele keine Einschränkung der Erfindung darstellen.

Ausführungsbeispiel 1 :
In den Kathodenblock mit den Außenmaßen 530 x 410 x 3360 mm3 (Breite (B) x Höhe (H) x Länge (L)) wurde eine schwalbenschwanzformige Nut mit einer Breite von 180 mm am Nutboden und der Nutöffnung, verjüngt auf 165 mm auf halber Höhe zwischen Nutboden und Nutöffnung, und mit einem Nutradius von 20 mm gefräst. Symmetrisch am Nutboden im Abstand von 80 mm wurden zwei Aussparungen mit Hinterschneidung gefräst. Dazu wurde ein Kugelfräser mit dem Kugel-Durchmesser von 30 mm verwendet, wobei die Kugel nur 25 mm tief in das Material eingetaucht ist. Dadurch ist die Kreisöffnung der Aussparung geringer als der Durchmesser und bildet eine Hinterschneidung. Die Grafitfolie mit einer Dicke von 2 mm wurde auf die Maße 50 x 3360 mm2 (B x L) zugeschnitten und auf den Nutboden des Blocks ausgehend vom längsseitigen Ende eingelegt. Die Aussparung wurde an den längsseitigen Enden des Blocks mit 150 g Kathodenmaterial verschlossen. Anschließend wurde der Kathodenbarren in der Nut platziert und mit 350 kg Gusseisen vergossen.

Ausführungsbeispiel 2:
In den Kathodenblock mit den Außenmaßen 530 x 410 x 3360 mm3 (B x H x L) wurde eine schwalbenschwanzformige Nut mit einer Breite von 180 mm am Nutboden und der Nutöffnung, verjüngt auf 165 mm auf halber Höhe zwischen Nutboden und Nutöffnung, und mit einem Nutradius von 20 mm gefräst. Am Nutboden wurden zwei Aussparungen mit Hinterschneidungen in die beiden Nutradien im 45° Winkel des Kathodenblocks gefräst. Diese Form wurde mit einem Kugel-Schaftfräser (Durchmesser Kugel 15 mm, Durchmesser Schaft 10 mm, Gesamttiefe der Aussparung 19 mm) erstellt, wobei von der einen schmalen Seite zur anderen schmalen Seite gefräst wurde und die Kugel des Fräser dabei völlig in das Material eingetaucht ist. Die Grafitfolie mit einer Dicke von 2 mm wurde auf die Maße 165 x 3360mm2 (B x L) zugeschnitten und auf den Nutboden des Blocks ausgehend vom längsseitigen Ende eingelegt. Die Aussparung wurde an den längsseitigen Enden des Blocks mit 100 g Kathodenmaterial verschlossen. Anschließend wurde der Kathodenbarren in der Nut platziert und mit 350 kg Gusseisen vergossen.

### Bezugszeichenliste

- 1: Kathodenblock zeigend schmale Seite/Endfläche
- 2: Nut, mit Gusseisen gefüllt
- 3: Kathodenbarren
- 4: Grafitfolie
- 5, 5': Aussparung mit Hinterschneidung
- 6, 6': Seitenwand der Nut
- 7: Nutboden
- 8, 8"; 8": Aussparung mit Hinterschneidung und Schaft
- 9: Kupfer
- 10: Nutradius
- 1 1 , 1 1 ': Anfang des Übergangsbereichs
- 12, 12': Ende des Übergangsbereichs
- 13: Nut mit variierender Tiefe

## Patentansprüche

1. Kathodenblock auf Basis von Kohlenstoff für eine Elektrolysezelle zur Herstellung von Aluminium mit mindestens einer Nut zur Aufnahme von wenigstens einem Kathodenbarren, wobei die mindestens eine Nut, mindestens eine, zumindest abschnittsweise in deren Längsrichtung verlaufende Aussparung, mit mindestens einer Hinterschneidung, aufweist, wobei Aussparung mit Hinterschneidung als eine Form definiert ist, die dazu führt, dass nach Füllung der Aussparung mit beispielsweise flüssigem Gusseisen das erstarrte Gusseisen nicht aus der Aussparung ohne Zerstörung der Form entfernt werden kann, wobei sich die mindestens eine Aussparung im Nutboden und/oder im Nutradius der Nut befindet.

2. Kathodenblock nach Anspruch 1, wobei die in Längsrichtung verlaufende mindestens eine Aussparung im Querschnitt die Form eines zur Nut hin geöffneten Kreises oder eines zur Nut hin geöffneten Kreises mit Schaft, wobei die Offnung kleiner als der Durchmesser des Kreises ausgebildet ist, aufweist.

3. Kathodenblock nach Anspruch 2, wobei bei dem Schaft der mindestens einen Aussparung, die Wände im Querschnitt parallel zueinander verlaufen

4. Kathodenblock nach Anspruch 1 oder 2, wobei die mindestens eine in Längsrichtung verlaufende Aussparung über die Lange des Kathodenblocks gesehen eine variierende Gesamttiefe in Bezug auf den Nutboden aufweist und die mindestens eine Aussparung an den längsseitigen Enden des Kathodenblocks eine geringere Gesamttiefe als in der Kathodenblockmitte aufweist.

5. Kathodenblock nach Anspruch 1 oder 4, wobei die in Langsrichtung verlaufende mindestens eine Aussparung eine Gesamttiefe von 5 mm bis 80 mm aufweist

6. Kathodenblock nach Anspruch 1, wobei die mindestens eine Aussparung mit einer Kombination aus Kupfer oder Stahl als leitfähigem Metall und Gusseisen gefüllt ist.

7. Kathodenblock nach Anspruch 1 oder 6, wobei die mindestens eine Aussparung wenigstens zu 50 Vol -% mit Gusseisen gefüllt ist

8. Kathodenblock nach Anspruch 6, wobei die mindestens eine Aussparung mit mindestens zu 10 Vol.-% mit leitfahigem Metall gefüllt ist

9. Kathodenblock nach Anspruch 6 oder 8, wobei das leitfähige Metall der Füllung die Form einer Folie oder eines Stabes aufweist

10. Kathodenblock nach Anspruch 1, wobei die mindestens eine Nut eine variierende Tiefe aufweist und die Nut an den langsseitigen Enden des Kathodenblocks eine geringere Tiefe als in der Kathodenblockmitte aufweist.

11. Kathodenblock nach Anspruch 1, wobei die mindestens eine Nut von den längsseitigen Enden des Kathodenblocks jeweils zu 1/3 der Kathodenlänge mit einer Graphitfolie ausgekleidet ist.

12. Kathodenblock nach Anspruch 11, wobei die Graphitfolie eine Dicke zwischen 0,2 und 3 mm aufweist.

13. Kathodenboden, welcher wenigstens einen Kathodenblock nach zumindest einem der voranstehenden Anspruche enthalt.

14. Elektrolysezelle, wobei sie einen Kathodenboden nach Anspruch 13 umfasst.

## Claims

1. A cathode block based on carbon for an electrolysis cell for producing aluminium comprising at least one groove for receiving at least one cathode bar, wherein the at least one groove has at least one recess extending at least portion-wise in the longitudinal direction thereof, with at least one undercut configuration, wherein the recess with undercut configuration is defined as a shape which has the result that after filling of the recess with for example liquid cast iron the set cast iron cannot be removed from the recess without destroying the shape, wherein the at least one recess is disposed in the groove bottom and/or in the radius of the groove.

2. A cathode block according to claim 1 wherein the at least one recess extending in the longitudinal direction in cross-section is in the shape of a circle which is open towards the groove or a circle which is open towards the groove and has a shaft, wherein the opening is less than the diameter of the circle.

3. A cathode block according to claim 2 wherein in the shaft of the at least one recess the walls in cross-section extend parallel to each other.

4. A cathode block according to claim 1 or claim 2 wherein the at least one recess extending in the longitudinal direction as viewed over the length of the cathode block is of a varying overall depth in relation to the groove bottom and the at least one recess is of a smaller overall depth at the lengthwise ends of the cathode block than in the centre of the cathode block.

5. A cathode block according to claim 1 or claim 4 wherein the at least one recess extending in the longitudinal direction is of an overall depth of 5 mm to 80 mm.

6. A cathode block according to claim 1 wherein the at least one recess is filled with a combination of copper or steel as a conductive metal and cast iron.

7. A cathode block according to claim 1 or claim 6 wherein the at least one recess is at least 50% by volume filled with cast iron.

8. A cathode block according to claim 6 wherein the at least one recess is filled with at least 10% by volume with conductive metal.

9. A cathode block according to claim 6 or claim 8 wherein the conductive metal of the filling is in the form of a foil or a rod.

10. A cathode block according to claim 1 wherein the at least one groove is of a varying depth and the groove is of a smaller depth at the lengthwise ends of the cathode block than in the centre of the cathode block.

11. A cathode block according to claim 1 wherein the at least one groove is lined with a graphite foil from the respective lengthwise ends of the cathode block to one-third of the cathode length.

12. A cathode block according to claim 11 wherein the graphite foil is of a thickness of between 0.2 and 3 mm.

13. A cathode bottom which contains at least one cathode block according to at least one of the preceding claims.

14. An electrolysis cell wherein it includes a cathode bottom according to claim 13.

## Revendications

1. Bloc cathodique à base de carbone destiné à une cellule électrolytique pour la production d'aluminium, comportant au moins une rainure permettant de recevoir au moins une barre cathodique, l'au moins une rainure présentant au moins un évidement qui s'étend au moins par sections dans sa direction longitudinale et qui comporte au moins une contre-dépouille, l'évidement doté de la contre-dépouille étant défini comme une forme grâce à laquelle, après le remplissage de l'évidement avec par exemple de la fonte liquide, la fonte solidifiée ne peut pas être retirée de l'évidement sans détruire la forme, l'au moins un évidement étant situé au fond de la rainure et/ou dans le rayon de la rainure.

2. Bloc cathodique selon la revendication 1, dans lequel l'au moins un évidement s'étendant dans la direction longitudinale présente, en section transversale, la forme d'un cercle ouvert en direction de la rainure ou d'un cercle ouvert en direction de la rainure et comportant une tige, l'ouverture étant plus petite que le diamètre du cercle.

3. Bloc cathodique selon la revendication 2, dans lequel, dans la tige de l'au moins un évidement, les parois sont parallèles entre elles en section transversale.

4. Bloc cathodique selon la revendication 1 ou 2, dans lequel l'au moins un évidement s'étendant dans la direction longitudinale présente, vu sur la longueur du bloc cathodique, une profondeur totale variable par rapport au fond de rainure, et l'au moins un évidement présente, au niveau des extrémités longitudinales du bloc cathodique, une profondeur totale plus petite qu'au centre du bloc cathodique.

5. Bloc cathodique selon la revendication 1 ou 4, dans lequel l'au moins un évidement s'étendant dans la direction longitudinale présente une profondeur totale de 5 à 80 mm.

6. Bloc cathodique selon la revendication 1, dans lequel l'au moins un évidement est rempli d'une combinaison de cuivre ou d'acier en tant que métal conducteur et de fonte.

7. Bloc cathodique selon la revendication 1 ou 6, dans lequel l'au moins un évidement est rempli de fonte à au moins 50 % en volume.

8. Bloc cathodique selon la revendication 6, dans lequel l'au moins un évidement est rempli de métal conducteur à au moins 10 % en volume.

9. Bloc cathodique selon la revendication 6 ou 8, dans lequel le métal conducteur du remplissage présente la forme d'une feuille ou d'une tige.

10. Bloc cathodique selon la revendication 1, dans lequel l'au moins une rainure présente une profondeur variable et la rainure présente une profondeur plus petite au niveau des extrémités longitudinales du bloc cathodique qu'au centre du bloc cathodique.

11. Bloc cathodique selon la revendication 1, dans lequel l'au moins une rainure est revêtue d'une feuille de graphite depuis les extrémités longitudinales du bloc cathodique respectivement jusqu'au 1/3 de la longueur de la cathode.

12. Bloc cathodique selon la revendication 11, dans lequel la feuille de graphite présente une épaisseur comprise entre 0,2 et 3 mm.

13. Fond cathodique contenant au moins un bloc cathodique selon au moins l'une des revendications précédentes.

14. Cellule électrolytique comprenant un fond cathodique selon la revendication 13.
